# EUROPÄISCHE PATENTSCHRIFT

(11) **EP 1 610 881 B1**
(45) Veröffentlichungstag und Bekanntmachung des Hinweises auf die Patenterteilung: **30.05.2007**
(21) Anmeldenummer: 04725004.8
(22) Anmeldetag: 01.04.2004
(51) Int. Cl.: B01D 33/067, B01D 33/11

(54) **VORRICHTUNG ZUM ENTFERNEN VON FEINEM SIEBGUT AUS EINER FLÜSSIGKEIT**
DEVICE FOR REMOVING FINE SCREENED MATERIAL FROM A LIQUID
DISPOSITIF PERMETTANT DE RETIRER UN PRODUIT DE FILTRAGE D'UN LIQUIDE

(30) Priorität: 04.04.2003 DE 10316173
(43) Veröffentlichungstag der Anmeldung: 04.01.2006
(73) Patentinhaber: Hans Huber AG Maschinen- und Anlagenbau, D-92334 Berching (DE)
(72) Erfinder: FROMMANN, Christian, 92318 Neumarkt (DE)
(74) Vertreter: Rehberg Hüppe + Partner
(86) Internationale Anmeldenummer: PCT/EP2004/003446
(87) Internationale Veröffentlichungsnummer: WO 2004/087289

(56) Entgegenhaltungen:
- EP-A- 0 177 451
- EP-A- 1 297 878
- DE-A- 19 547 585
- US-A- 4 198 299
- US-A- 5 008 010
- US-B1- 6 337 013

## Beschreibung

Die Erfindung betrifft eine Vorrichtung zum Entfernen von feinem Siebgut, insbesondere Schlamm, aus einer Flüssigkeit, insbesondere Abwasser, mit einem umlaufend angetriebenen zylindermantelförmigen Siebrost, der eine Abscheidefläche aufweist und von dem Abwasser von innen nach außen durchströmt wird, und mit einer außerhalb des Siebrostes angeordneten Ablöseeinrichtung mit Düsen, aus denen zum Ablösen des auf der Innenseite des Siebrostes abgeschiedenen Siebgutes Spritzwasser von außen nach innen gespritzt wird.

Bei der Behandlung von Abwässern in Kläranlagen geht es darum, Schlämme mit relativ hohem Wassergehalt so zu behandeln, dass einerseits der Schlammgehalt angehoben und andererseits der Wassergehalt angehoben wird. Es soll also Schlamm und Flüssigkeit möglichst wirkungsvoll voneinander getrennt werden.

### STAND DER TECHNIK

Eine Vorrichtung der eingangs beschriebenen Art ist aus der DE 34 20 157 C1 bekannt. Diese Vorrichtung weist einen mit seiner Achse schräg in das Gerinne eingestellten zylindermantelförmigen Siebrost auf, der anströmseitig hydraulisch offen und abströmseitig im Wesentlichen hydraulisch geschlossen ausgebildet ist. Der Siebrost ist mit einer Schlitzlochung versehen, die auf der Innenseite eine Abscheidefläche bildet, während die Flüssigkeit durch die Schlitze hindurchtritt und im Gerinne verbleibt. Der zylindermantelförmige Siebrost wird in Verbindung mit einer Schneckenfördereinrichtung umlaufend angetrieben. Die Schneckenfördereinrichtung beginnt an einem Einwurftrichter, der koaxial im Bereich des Siebrostes ortsfest angeordnet und gelagert ist. Die Schneckenfördereinrichtung weist ein Gehäuse und eine Förderschnecke auf. Oberhalb des Einwurftrichters ist auf der Außenseite des Siebrostes eine ortsfest angeordnete Ablöseeinrichtung in Form einer Bürstenwalze oder einer Spritzwasserleiste vorgesehen, um von außen das an der Innenseite des Siebrostes befindliche Rechen- und/oder Siebgut abzulösen. Das Rechengut fällt in einen Einwurftrichter, an dem die Schneckenfördereinrichtung beginnt, und wird von dieser zu einer Abwurfstelle außerhalb der Flüssigkeit hochgefördert. Der zylindermantelförmige Siebrost weist auf seiner Innenseite spiralig angeordnete Leitbleche auf, die die Aufgabe haben, insbesondere größere Rechengutstücke beim Umlauf des Siebrostes mit nach oben zu fördern und an einem Zurückfallen während der Rotation des Siebrostes zu hindern. Die Durchbrechungen der Schlitzlochung im Siebrost können in einem gewissen Größenbereich von mehreren Millimetern bis hin zu etwa 10 mm gestaltet werden. Kleinere Durchbrechungen sind wirtschaftlich nicht herstellbar, so dass die bekannte Vorrichtung zur Behandlung von schlammartigem Siebgut nicht eingesetzt werden kann.

Auch aus der US-A-4,198,299 ist eine Vorrichtung zum Entfernen von feinem Siebgut aus einer Flüssigkeit bekannt. Die Vorrichtung weist einen umlaufend angetriebenen zylindermantelförmigen Siebrost auf, der zwei- oder dreiteilig ausgebildet ist. Als tragendes Element des Siebrostes ist eine Käfigkonstruktion vorgesehen, die Endscheiben und Stützringe aufweist und durch Halteelemente ergänzt ist. Zwischen den Endscheiben und den Stützringen einerseits und den außen angeordneten Halteelementen wird ein Filtergewebe gehalten, das eine einlagige Abscheidefläche bildet und von dem Abwasser von innen nach außen durchströmt wird. Außerhalb des Siebrostes ist eine Ablöseeinrichtung mit Düsen angeordnet, aus denen zum Ablösen des auf der Innenseite der Abscheidefläche des Siebrostes abgeschiedenen Siebgutes Spritzwasser von außen nach innen gespritzt wird.

Aus der US-B-6,337,013 ist eine weitere Vorrichtung zum Entfernen von feinem Siebgut aus einer Flüssigkeit bekannt. Die Vorrichtung weist einen ortsfest angeordneten zylindermantelförmigen Siebrost auf, der dreiteilig ausgebildet ist. Als tragendes Element des Siebrostes ist auch hier eine Käfigkonstruktion vorgesehen, die einen scheibenartigen Vorfilter sowie Flansche und Stangen aufweist. Zwischen den Flanschen ist eine zweilagige Abscheidefläche aufgespannt, die von einem Lochblech und einem daran festgesinterten Maschensieb gebildet wird und von dem Abwasser von innen nach außen durchströmt wird.

Auch aus der US-A-5,008,010 ist eine weitere Vorrichtung zum Entfernen von feinem Siebgut aus einer Flüssigkeit bekannt. Die Vorrichtung weist einen umlaufend angetriebenen zylindermantelförmigen Siebrost auf, der dreiteilig ausgebildet ist. Als tragendes Element des Siebrostes ist auch hier eine Käfigkonstruktion aus rahmenartigen Ringen und Längsstreben vorgesehen. Dazwischen sind Filterelemente gehalten, die zweilagig ausgebildet sind. Auf ein äußeres Lochblechelement mit vergleichsweise großen Öffnungen ist ein Element aus einem Maschensieb mit kleinen Öffnungen aufgeschweißt.

Aus der DE-OS 24 26 024 ist ein rotierendes Filter mit automatischer, kontinuierlicher Entschlammung für Fremdstoffe enthaltende Flüssigkeiten bekannt. Es wird ein umlaufend angetriebener zylindermantelförmiger Siebrost in Form einer Filtriertrommel genutzt. Die Filtriertrommel besitzt zwei scheibenförmige Wangen, zwischen denen ein Sieb gespannt gehalten wird. Die beiden Wangen werden durch Stege auf Abstand gehalten. Das Sieb ist vorzugsweise mittels elastischen Halteringen frei aufgespannt an den scheibenförmigen Wangen gehalten und kann so leicht ausgetauscht werden. Das Sieb kann aber auch an seinem Umfang an den Wangen mittels Befestigungsklammern oder durch andere Einrichtungen befestigt werden. Die Vorrichtung ist mit horizontal ausgerichteter Achse angeordnet und besitzt einen Einwurftrichter sowie eine Schneckenfördervorrichtung zum axialen Herausfördern des Siebguts.

Aus der US 3,747,770 oder auch der US 5,399,265 ist ein dreiteiliger Aufbau für einen Siebrost bekannt. Der Siebrost weist innen ein Maschensieb mit kleinformatigen Maschen auf, welches an ein Gitter mit großformatigen Durchbrechungen angelehnt ist. Außen ist als drittes Teil des Siebrostes eine Trommel vorgesehen, die die Stabilität und Festigkeit erbringt und aus einer entsprechenden Anzahl Querstreben sowie aus Umfangselementen zusammengesetzt ist. Das Maschensieb ist durch einen Sinterprozess mit der Gitterkonstruktion verbunden, so dass eine Vielzahl von Kontaktpunkten zwischen diesen beiden Elementen geschaffen wird.

Aus der DE-OS 24 02 871 ist ein Drehfilter zum Trennen fester Stoffe von einer Flüssigkeit bekannt. Der Drehfilter weist einen achteckigen kastenförmigen Aufbau auf, über den außen ein Filternetz gespannt ist. Das Filternetz wird von der mit dem Siebgut beladenen Flüssigkeit von innen nach außen durchströmt, so dass sich das Siebgut an der Innenseite des Filternetzes ablagert. Außerhalb des Filternetzes ist eine Ablöseeinrichtung, die mit Druckluft arbeitet, vorgesehen, um das Siebgut in einen Einwurftrichter einer Förderschnecke zu werfen und so das Siebgut axial aus dem Bereich der Siebtrommel herauszuführen.

### AUFGABE DER ERFINDUNG

Der Erfindung liegt die Aufgabe zugrunde, eine Vorrichtung der eingangs beschriebenen Art so weiterzubilden, dass sie zum Abscheiden von schlammartigem Siebgut in besonderer Weise geeignet ist, welches aus einer Flüssigkeit entnommen werden soll. Es geht dabei auch um die Abscheidung von Faserstoffen und anderem kleinformatigem Siebgut sowie gegebenenfalls um die Abscheidung von partikulärem Material, also auch um Rechengut.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Wesentlicher Bestandteil der Vorrichtung ist in jedem Fall ein umlaufend angetriebener zylindermantelförmiger Siebrost, der von innen nach außen durchströmt wird. Der Siebrost besteht aus zwei wesentlichen Elementen, nämlich einem Stützkörper aus Blech mit großformatigen Durchbrechungen. Dieser Stützkörper ist also in Form eines Lochbleches ausgebildet. Dabei geht es darum, durch die großformatigen Durchbrechungen eine möglichst große freie durchströmbare Fläche zu schaffen, aber andererseits dem Siebrost die erforderliche Festigkeit und Stabilität zu geben. Die eigentliche Abscheidefläche wird von dem zweiten Teil des Siebrostes gebildet, nämlich einem Maschensieb mit kleinformatigen Maschen, welches auf der Innenseite des Siebrostes bzw. des Lochbleches angeordnet ist. Ein solches Maschensieb besitzt nur eine begrenzte Stabilität. Es ist punkt- oder bereichsweise mit dem Stützkörper fest verbunden, also an diesem abgestützt und gehalten. Durch die zugeordnete Durchströmrichtung von innen nach außen kann sich das Maschensieb an dem Stützkörper aus Lochblech abstützen, wobei nur Bereiche des Maschensiebes, die der Größe der einzelnen großformatigen Durchbrechung entsprechen, frei aufgespannt sind. Damit erhält das Maschensieb auch im Wesentlichen die angestrebte zylindermantelförmige Form. Der Stützkörper aus Blech kann mit gestanzten großformatigen Durchbrechungen versehen sein und wird durch einen Biegevorgang aus der Tafelform in die Zylinderform umgeformt. Es ist auch möglich, den Stützkörper aus Blech aus mehreren Sektionen, also Zylinderteilen zusammenzusetzen. Insbesondere ist eine halbschalige Bauweise oder die Zusammenfügung von drei Dritteln denkbar.

Das innen an dem Maschensieb abgeschiedene Siebgut wird durch den angetriebenen Siebrost nach oben hochgefördert und gelangt dabei aus der Flüssigkeit heraus. Auf der Außenseite des Siebrostes außerhalb der Flüssigkeit ist eine Ablöseeinrichtung mit Spritzdüsen vorgesehen, aus denen durch die großformatigen Durchbrechungen des Stützkörpers aus Blech hindurch das auf der Innenseite des Maschensiebes haftende Siebgut abgelöst wird. Über eine Fördereinrichtung wird das Siebgut aus dem Bereich des Siebrostes herausgeführt.

Die Vorrichtung kann in ein vorhandenes Gerinne eingestellt werden. Dabei wird sie mit schräg verlaufender Achse angeordnet und es ist eine Fördereinrichtung erforderlich, um das abgeschiedene Siebgut aus dem Gerinne herauszufördern. Es ist aber auch möglich, die Vorrichtung mit horizontaler Achse aufzustellen. Dabei wird ein Behälter benutzt, der über einen Ablauf für die Flüssigkeit verfügt. Das Siebgut wird in axialer Richtung durch zusätzliche Maßnahmen am Siebrost gefördert und tritt somit axial aus der Vorrichtung aus.

Der Flächenanteil der großformatigen Durchbrechungen des Stützkörpers sollte im Bereich zwischen 70 % und 90 % liegen, so dass das Lochblech mit seinen Stegen einen Flächenanteil im Bereich zwischen 30 % und 10 % aufweist. Bei dieser Bemessung geht es darum, dass das Lochblech die Stabilität des Siebrostes bereitstellt, während das Maschensieb entsprechend dem jeweiligen Anwendungsfall in seiner Maschenweite angepasst ausgebildet werden kann. Trotzdem entsteht als Siebrost eine formstabile Einheit mit langer Lebensdauer. Das Maschensieb wie auch das Lochblech können aus Edelstahl ausgebildet sein.

Die großformatigen Durchbrechungen können rechteckige, quadratische oder abgerundete Form aufweisen. Die Formgebung und Anordnung ist so abgestimmt, dass aus dem Maschensieb kleine unabhängig voneinander arbeitende Bereiche geschaffen werden, in denen die Abscheidung des Siebguts erfolgt. Größere Durchhänge des Maschensiebes werden damit vermieden. Die auftretende Walkbewegung der Bereiche des Maschensiebes zwischen der Abscheidestellung unter dem Flüssigkeitsspiegel und der Ablösestellung oberhalb desselben werden vorteilhaft gering gehalten.

Das Maschensieb kann eine Maschenweite im Bereich zwischen 0,1 bis 1,0 mm aufweisen und lässt sich so auch bei unverändertem Lochblech variabel an die verschiedenen Anwendungsfälle anpassen.

Wenn die Vorrichtung in Verbindung mit in einem Gerinne strömender Flüssigkeit eingesetzt wird, wird der Siebrost zur Lagerung in diesem Gerinne mit dann schräg stehender Achse angeordnet. Die Vorrichtung weist in diesem Falle eine zu einer Abwurfstelle außerhalb der Flüssigkeit führende Fördereinrichtung mit einer angetriebenen Förderschnecke auf. Im Bereich des Siebrostes ist ein Einwurftrichter vorgesehen, an den die Fördereinrichtung angeschlossen ist, so dass die Fördereinrichtung mit ihrer Förderschnecke das abgeschiedene Siebgut aufnimmt, weiter entwässert und nach schräg aufwärts aus dem Gerinne herausführt.

Auf der inneren Umfangsfläche des Siebrostes können Schöpfelemente zum Hochfördern des feinen Siebgutes angeordnet sein. Diese Schöpfelemente weisen trog- oder kammerartige Form auf. Sie sind teilweise durchbrochen, um das Abströmen von Flüssigkeit während des Hochförderns zu ermöglichen und so eine Aufkonzentration von Schlamm in den Schöpfelementen herbeizuführen.

Es ist aber auch möglich, die Vorrichtung außerhalb eines Gerinnes, beispielsweise in einem Behälter zu betreiben. Der Siebrost weist dann eine horizontal in den Behälter eingestellte Lage auf. Seine Achse ist horizontal ausgerichtet. Auch hier kann an sich eine Fördereinrichtung mit Förderschnecke und Einwurftrichter Verwendung finden. Eine andere Möglichkeit besteht darin, dass die innere Umfangsfläche des Maschensiebes des Siebrostes mit einer Leit- und Förderwendel versehen ist, so dass das abgeschiedene Siebgut in axialer Richtung durch den Siebrost gefördert und an seinem dem Eingang abgekehrten Ende herausgefördert wird.

Sofern ein Einwurftrichter mit nachgeschalteter Fördereinrichtung und Förderschnecke eingesetzt wird, wird der Boden des Einwurftrichters geschlitzt ausgebildet, um auch in diesem Bereich den Durchtritt von Flüssigkeit zu ermöglichen und eine Aufkonzentration des feinen Siebgutes im Einwurftrichter zu erhalten.

Die feste Verbindung zwischen Maschensieb und Stützkörper erfolgt zweckmäßig durch Punktschweißen. Damit wird das Maschensieb unverrückbar mit dem Stützkörper verbunden und es entsteht eine feste Einheit des Siebrostes. Sowohl die großformatigen Durchbrechungen des Lochbleches wie auch die kleinformatigen Durchbrechungen des Maschensiebes werden auf den jeweiligen Anwendungsfall abgestimmt und angepasst.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.1**: zeigt eine schematische Seitenansicht der Vorrichtung, eingestellt in ein Gerinne.
- **Fig. 2**: zeigt eine vergrößerte Darstellung der Einzelheiten der Vorrichtung im Bereich des angetriebenen Siebrostes.
- **Fig. 3**: zeigt einen Schnitt gemäß der Linie III-III in Fig. 2.
- **Fig. 4**: zeigt eine Draufsicht von innen auf den Aufbau des Siebrostes abgewickelt in die Ebene.
- **Fig. 5**: zeigt eine Draufsicht auf den Stützkörper 13 mit kreisförmigen Durchbrechungen 37.
- **Fig. 6**: zeigt eine Draufsicht auf den Stützkörper bzw. das Lochblech in einer anderen Ausführungsform.
- **Fig. 7**: zeigt eine Darstellung eines Siebrostes 6 mit Stützring 42.
- **Fig. 8**: verdeutlicht einen aus mehreren Zylinderabschnitten 43 zusammengesetzten Siebrost 6.
- **Fig. 9**: zeigt eine Darstellung ähnlich Fig. 2, jedoch bei einer abgewandelten Ausführungsform.
- **Fig. 10**: zeigt eine schematisierte Seitenansicht der Vorrichtung mit horizontal angeordneter Achse.

### FIGURENBESCHREIBUNG

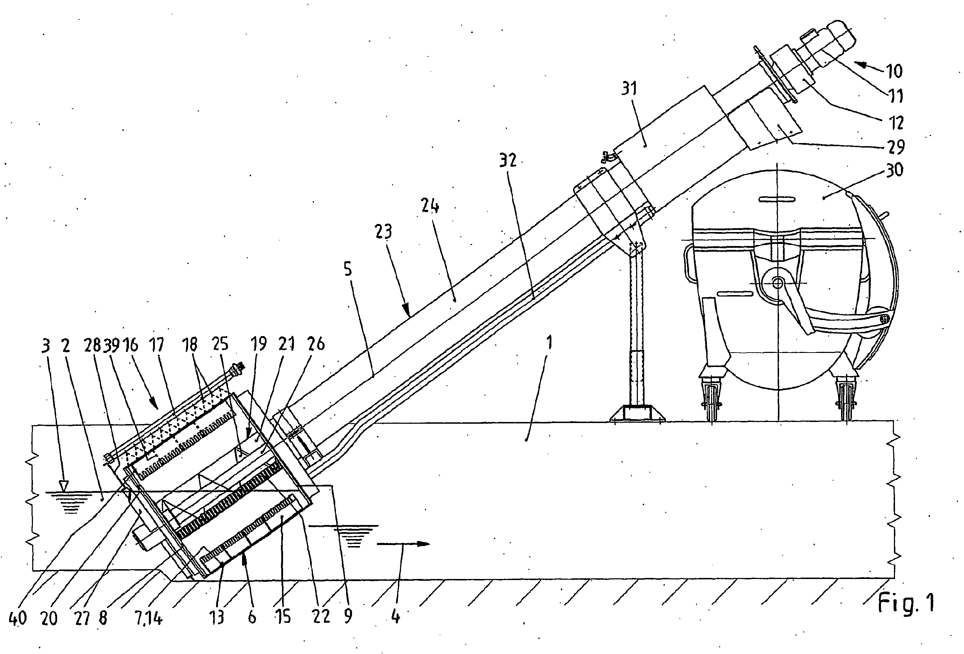

**Fig. 1** zeigt einen Teil eines Gerinnes 1, in welchem eine mit Siebgut verschmutzte Flüssigkeit 2 bis zu einem Wasserstand 3 in Richtung eines Pfeils 4 strömt. Die Vorrichtung ist mit ihrer Achse 5 schrägstehend im Gerinne 1 eingebaut, wobei der Einbauwinkel vorzugsweise etwa 35° betragen kann. Die Vorrichtung weist einen zylindermantelförmigen Siebrost 6 auf, dessen einer wesentlicher Bestandteil ein Maschensieb 7 ist, welches als Maschengewebe ausgebildet sein kann. Der Siebrost 6 weist anströmseitig eine offene Stirnfläche 8 auf, durch die die mit Siebgut beladene, verschmutzte Flüssigkeit in den Innenraum des Siebrostes 6 einströmt. Abströmseitig ist eine entsprechend abgedichtete und damit hydraulisch geschlossene Stirnfläche 9 vorgesehen. Im Bereich der Stirnfläche 9 ist der Siebrost 6 drehbar aufgelagert und gegenüber stillstehenden Teilen abgedichtet. Der Siebrost 6 wird umlaufend um seine Achse 5 angetrieben. Der Antrieb geschieht insbesondere diskontinuierlich, so dass Stillstandszeiten mit Umlaufzeiten abwechseln. Als Antrieb 10 dient ein Motor 11 mit gegebenenfalls vorgesehenem Getriebe 12.

Der Siebrost 6 weist neben dem Maschensieb 7 als gestaltgebendes Tragelement einen Stützkörper 13 auf. Der Stützkörper 13 ist ein Lochblech, welches in einfacher Weise kostengünstig herstellbar ist. Der Stützkörper 13 nimmt auf seiner Innenseite das Maschensieb 7 auf. Stützkörper 13 und Maschensieb 7 können beide aus Edelstahl bestehen. Sie lassen sich beide an den jeweiligen Anwendungsfall optimal anpassen. Der Stützkörper 13 besitzt großformatige Durchbrechungen mit geringem Steganteil. Das Maschensieb 7 ist insbesondere als Quadratmaschensieb ausgebildet und besitzt kleinformatige Durchbrechungen. Der Stützkörper 13 hat die Aufgabe, die Gestalt des Siebrostes 6 dauerhaft zylindermantelförmig festzulegen und die entsprechenden Kräfte aufzunehmen. Das Maschensieb 7 bildet auf seiner inneren Oberfläche des Zylindermantels eine Abscheidefläche 14. Die Abscheidefläche 14 wird durch Leitbleche 15 ergänzt, die parallel zur Achse 5 der Vorrichtung bzw. zu einer Mantellinie des zylindermantelförmigen Siebrostes 6 angeordnet sein können. Die Leitbleche 15 schließen abgedichtet an die Abscheidefläche 14 an und sind durch Trennwände 39 unterteilt und zumindest am einen Ende durch eine Abschlusswand 40 abgeschlossen. Die so gebildeten Fördertröge laufen mit dem Siebrost 6 um und bilden damit trogartige Kammern oder Schöpfelemente, die sich von unterhalb des Wasserstands 3 beim Umlauf bis aus dem Wasserstand 3 nach oben heraus bewegen und der Hochförderung des Siebgutes dienen.

Oberhalb des Wasserstands 3 und oberhalb des Siebrostes 6 ist eine Ablöseeinrichtung 16 vorgesehen, die eine Spritzleiste 17 mit Düsen 18 aufweist. Mit Hilfe der Ablöseeinrichtung 16 wird Spritzwasser von außen durch Durchbrechungen des Stützkörpers 13 und durch die Durchbrechungen in dem Maschensieb 7 gespritzt, so dass am inneren Umfang des Maschensiebes 7 abgeschiedenes Siebgut losgelöst wird und infolge Schwerkrafteinfluss bzw. auch durch die Kräfte des gespritzten Wassers in einen Einwurftrichter 19 gelangt, der parallel zur Achse 5 der Vorrichtung vorzugsweise konzentrisch im Bereich des Siebrostes 6 ortsfest gelagert ist. Die Ablöseeinrichtung 16 kann mit Spritzwasser und/oder Druckluft arbeitend ausgebildet sein. Der Einwurftrichter 19 weist in Zuordnung zu der offenen Stirnwand 8 des Siebrostes 6 eine hochgezogene Trichterwand 20 sowie Seitenwände 21 auf. Der Bodenbereich des Einwurftrichters 19 ist mit Durchbrechungen 22 versehen, die in Form von Bohrungen mit einem Durchmesser bis zu 2 mm ausgebildet sein können.

Koaxial zur Achse 5 der gesamten Vorrichtung und damit auch des Siebrostes 6 ist eine Schneckenfördereinrichtung 23 vorgesehen, die als wesentliche Bestandteile ein Gehäuse 24 und eine darin untergebrachte Förderschnecke 25 aufweist. Eine durchgehende Welle 26, die die Förderschnecke 25 trägt, erstreckt sich vom Motor 11 bzw. vom Getriebe 12 durch das gesamte Gehäuse 24 hindurch und steht im Bereich des Siebrostes 6 gegenüber dem Gehäuse 24 axial über. In diesem Bereich arbeitet die Förderschnecke 25 mit dem Einwurftrichter 18 zusammen. Hier kann die Förderschnecke 25 auch mit aus Übersichtlichkeitsgründen nicht dargestellten Bürstenelementen versehen sein, die an der durchbrochenen Bodenwandung des Einwurftrichters 19 entlangstreichen und damit die Durchbrechungen 22 immer wieder säubern und freilegen.

Der Motor 11 treibt über die Welle 26 die Förderschnecke 25 der Schneckenfördereinrichtung 23 an. Der Motor 11 dient zugleich dem umlaufenden Antrieb des Siebrostes 6. Zu diesem Zweck kann ein Antriebsarm 27 vorgesehen sein, der drehfest mit der Welle 26 wie auch mit dem Siebrost 6, insbesondere dessen Tragelement 13 verbunden ist. Durch ein Auskleideblech 28 wird der Zwischenraum zwischen dem Siebrost 6 und den Wänden des Gerinnes 1 abgedichtet, so dass die verschmutzte Flüssigkeit gezwungen ist, durch die offene Stirnfläche 8 in den Innenraum des zylindermantelförmigen Siebrostes 6 einzuströmen. Dabei strömt die Flüssigkeit durch Durchbrechungen in dem Maschensieb 7 und verbleibt somit im Gerinne, während sich das Siebgut auf der inneren Oberfläche des Maschensiebes 7 abscheidet und beim umlaufenden Antrieb des Siebrostes 6 mit nach oben gefördert wird. Nach dem Abwurf des Siebgutes durch die Ablöseeinrichtung 16 gelangt dieses in den Bereich des Einwurftrichters 19 und damit auch in den Wirkbereich der Schneckenfördereinrichtung 26. Es wird nach oben gefördert und gelangt über eine Abwurfstelle 29 beispielsweise in einen Container 30. Im oberen Bereich der Schneckenfördereinrichtung 23 kann eine Presszone 31 untergebracht sein, in der das hochgeförderte Siebgut weiter entwässert wird, bevor es zu der Abwurfstelle 29 gelangt. Eine Leitung 32 dient der Rückführung von in der Presszone 31 abgeschiedener Flüssigkeit in das Gerinne 1.

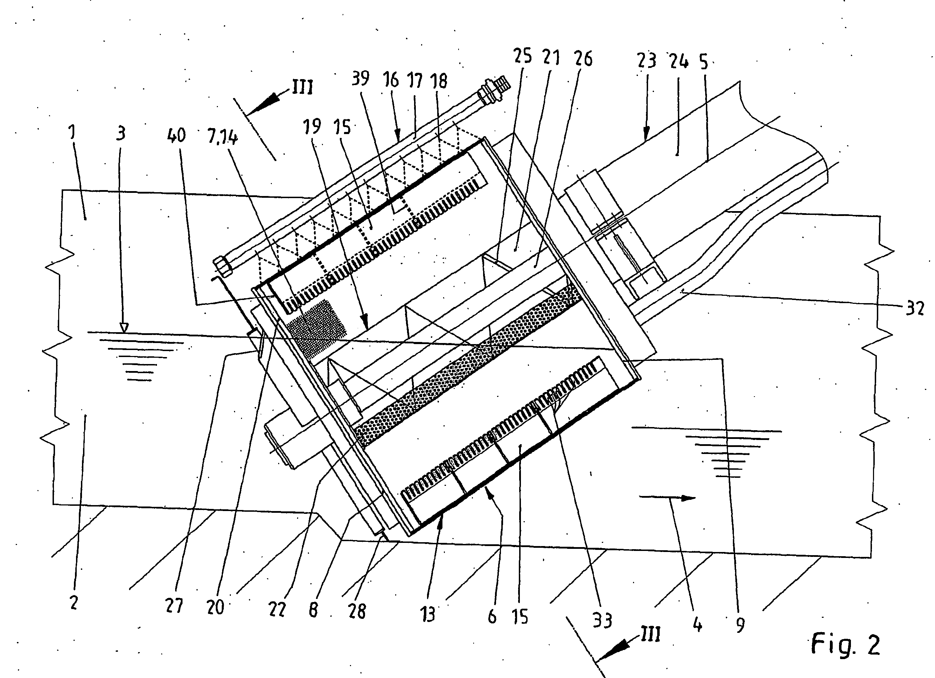

Fig. 2 verdeutlicht noch einmal in vergrößerter Darstellung die Ausbildung im Bereich des Siebrostes 6. Es ist ausschnittsweise der innere Umfang des Siebrostes 6 verdeutlicht, an dem der Stützkörper 13 mit dem Maschensieb 7 belegt ist, welches die Abscheidefläche 14 bildet. Es ist auch erkennbar, dass sich die Leitbleche 15 achsparallel erstrecken und in dieser Weise gegen die Abscheidefläche 14 des Maschengewebes 7 angestellt sind. Die Leitbleche 15 weisen an ihrem freien, der Abscheidefläche 14 abgekehrten Seite Durchbrechungen 33 auf, die hier kammartig ausgebildet sind. Diese Durchbrechungen 33 können auch in Form von Bohrungen in diesem Bereich der Leitbleche 15 realisiert werden. Damit findet während der Hochförderung des Siebgutes in den trogartigen Kammern eine dauernde Entwässerung des Siebgutes statt, indem sich die Flüssigkeitsspiegel in den Kammern verändern und dabei Flüssigkeit durch die kammartigen Durchbrechungen 33 oder die Bohrungen übertritt und in das Gerinne zurückgelangt.

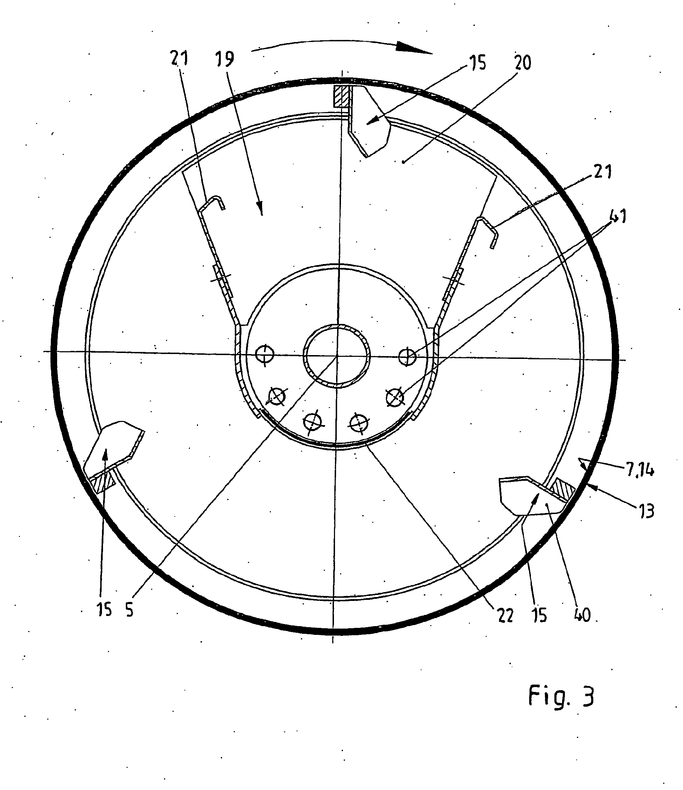

Fig. 3 verdeutlicht noch einmal eine Schnittansicht gemäß der Linie III-III in Fig. 2. Der Einwurftrichter 19 ist besonders gut erkennbar. Der Einwurftrichter weist die Trichterwand 21 auf, die in ihrem unteren Bereich Öffnungen 41 besitzen kann, die zusätzlich zu den Durchbrechungen 22 im Boden des Einwurftrichters 19 vorgesehen sind. Die Öffnungen 41 können sinnvoll einen größeren Durchmesser als die im Bodenbereich angeordneten Durchbrechungen 22 aufweisen. Die Öffnungen 41 können aber auch fehlen. Weiter ist die Anordnung von drei Leitblechen 15 erkennbar, die als gerade Stücke hergestellt und parallel zur Achse 5 der Vorrichtung angeordnet sind.

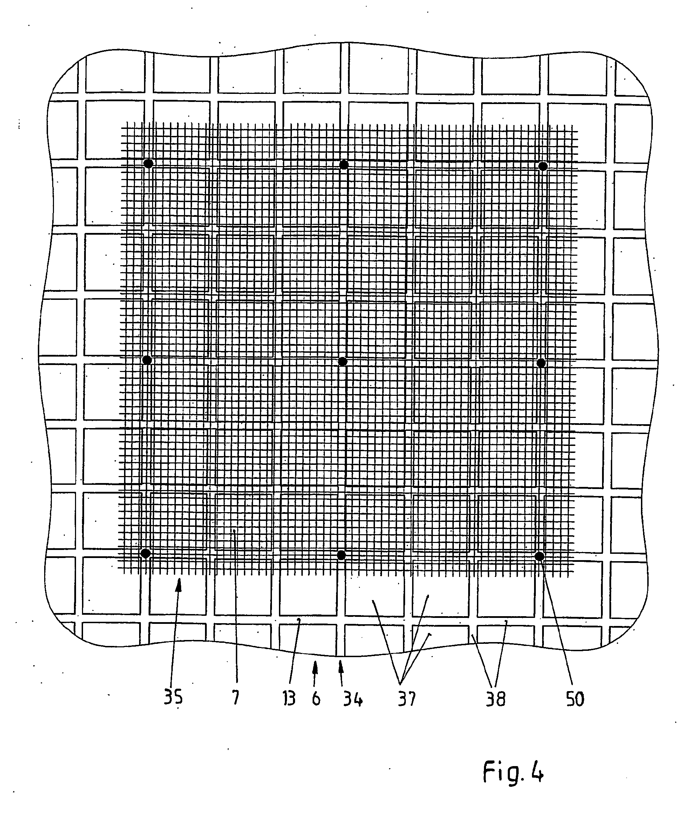

Fig. 4 verdeutlicht einerseits eine vergrößerte Darstellung des Maschensieb 7 und des als Tragelement dienenden Stützkörpers 13. Das Maschensieb 7 ist hier als Quadratmaschengewebe 35 ausgebildet. Der Stützkörper 13 ist ein Lochblech 34, das gestaltgebend und damit relativ starr ausgebildet ist, so dass es zylindermantelförmig gebogen, seine Form beibehält und die Festigkeit des Siebrostes 6 bereitstellt. Das Lochblech 34 weist großformatige Durchbrechungen 37 und Stege 38 auf. Das Quadratmaschengewebe 35 besitzt eine Maschenweite 36, die je nach Anwendungsfall im Bereich zwischen 0,1 und 1,0 mm gewählt werden kann. Die Innenseite des Quadratmaschengewebes 35 bildet die Abscheidefläche 14. Schweißpunkte 50 verdeutlichen die feste Verbindung zwischen Maschensieb 7 und Stützkörper 13.

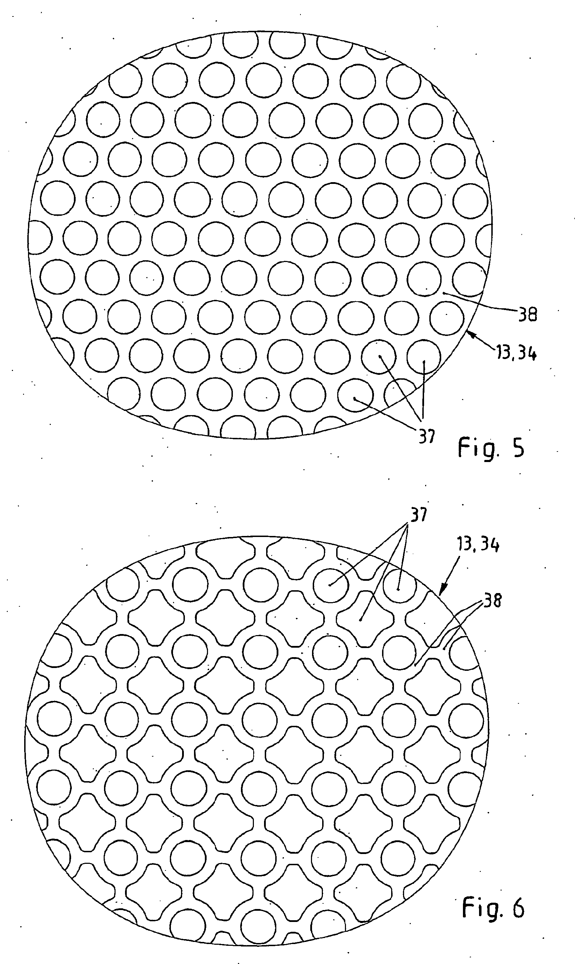

Die Fig. 5 und 6 zeigen zwei weitere Ausführungsmöglichkeiten für den Stützkörper 13 bzw. das Lochblech 34. Gemäß Fig. 5 sind die großformatigen Durchbrechungen 37 in Form von kreisrunden Löchern vorgesehen. Fig. 6 zeigt eine weitere Ausführungsform, bei der zwei Arten von großformatigen Durchbrechungen 37 von den Stegen 38 gebildet werden. Weitere Gestaltungsmöglichkeiten sind ohne weiteres denkbar und anwendbar. Die großformatigen Durchbrechungen 37 werden insbesondere durch Stanzen hergestellt. Ihr Flächenanteil sollte möglichst groß, vielleicht in der Größenordnung von 80 bis 90 % sein. Die Stege 38 sind so bemessen, dass ihr Flächenanteil entsprechend gering ist, also nur eine entsprechend geringe Fläche für den Durchtritt von Flüssigkeit verstellt ist. Der Stützkörper 13 ist ansonsten für die Festigkeit des Siebrostes 6 verantwortlich.

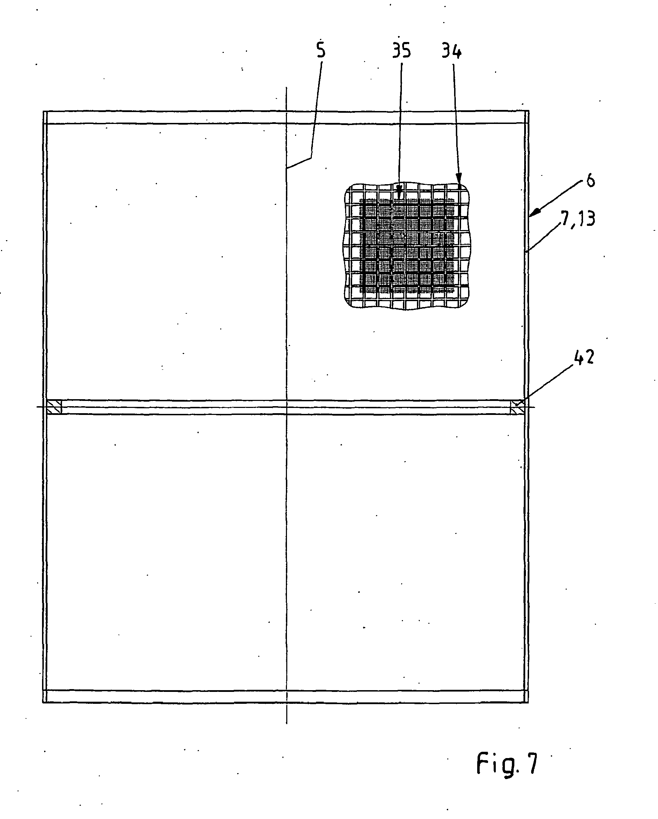

Fig. 7 zeigt die Darstellung eines Siebrostes 6 mit seinem innenliegenden Maschensieb 7 und seinem außenliegend angeordneten Stützkörper 13, und zwar relativ zur Achse 5. Es ist auch auf einen Teil des Umfangs das Quadratmaschengewebe 35 und das Lochblech 34 angedeutet. Der hier dargestellte Siebrost 6 weist einen relativ großen Durchmesser und eine große Länge auf. Zur Versteifung und Erhöhung der Stabilität des Siebrostes 6 ist ein Stützring 42 angedeutet, der von innen her an das Maschensieb 7 angestellt ist. Es versteht sich, dass über die axiale Länge auch mehrere solche Stützringe 42 angeordnet sein können.

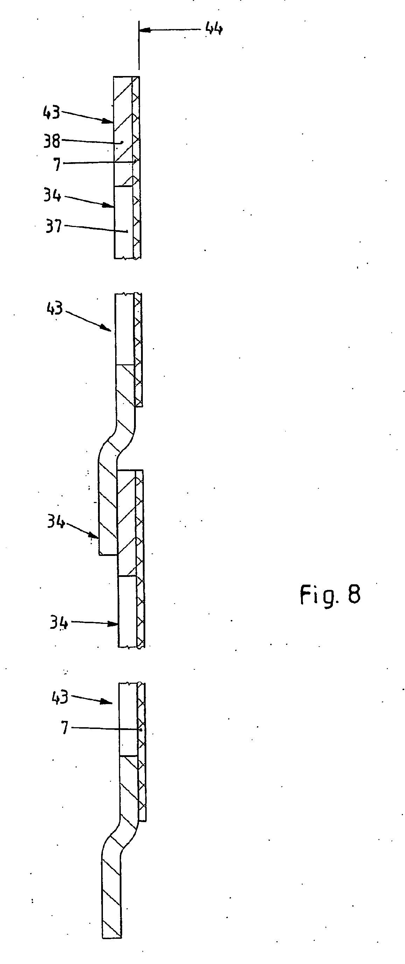

Aus Fig. 8 ist ersichtlich, dass der Siebrost 6 in axialer Richtung auch aus mehreren Zylinderabschnitten 43 zusammengesetzt sein kann. Zur Verdeutlichung ist ein Innendurchmesser 44 angedeutet. Es ist leicht vorstellbar, dass auch in der anderen Richtung, also in Umfangsrichtung des Siebrostes 6, eine Unterteilung erfolgen kann. Hier können beispielsweise Halbschalen, jeweils bestehend aus halbschalenförmigen Lochblechen 34, zusammengefügt sein. Ebenso können Teile des Maschensiebs 7 zugeordnet sein. Es ist auch möglich, in einen aus Halbschalen oder noch mehreren Teilen zusammengesetzten Stützkörper 13 ein gemeinsames zylindermantelförmig verlaufendes Maschensieb 7 einzusetzen.

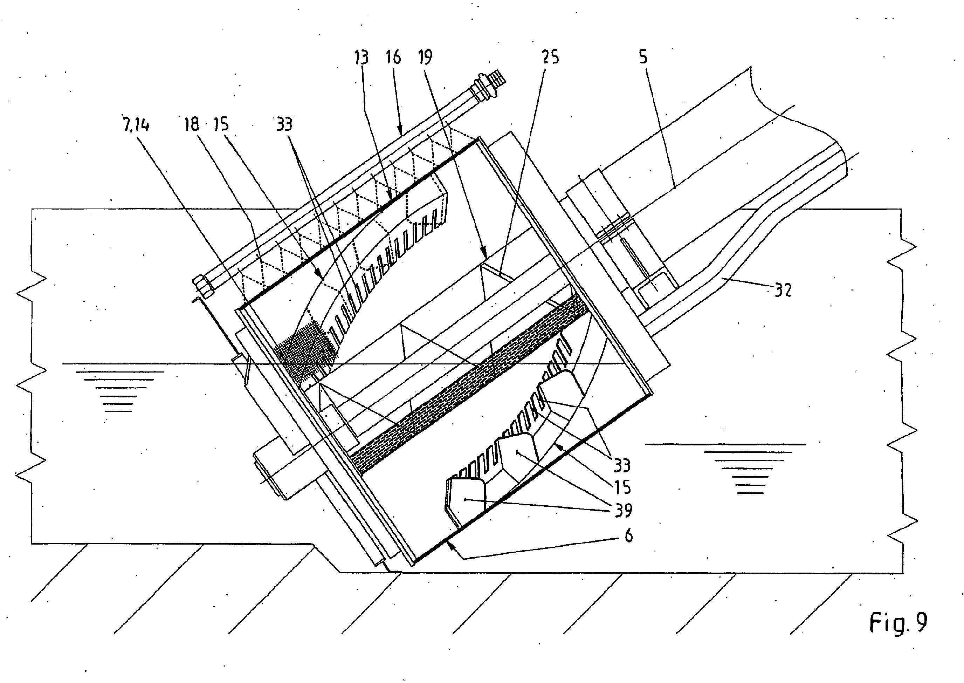

Fig. 9 zeigt eine Ausführungsform, die weitgehend mit der Ausführungsform der Fig. 1 übereinstimmt. Jedoch sind abweichend hiervon die Leitbleche 15 auf der Innenseite des Maschensiebes 7 spiralförmig ausgebildet und angeordnet. Es sind deutlich die Trennwände 39 erkennbar, ebenso die kammartigen Durchbrechungen 33, so dass einzelne trogartige Schöpfelemente erkennbar sind, die beim Umlauf des Siebrostes 6 Siebgut nach oben mitnehmen.

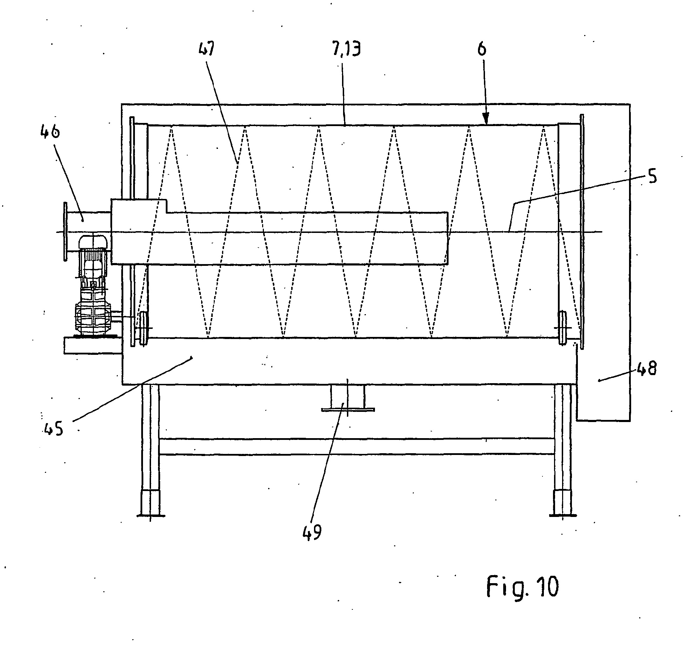

Fig. 10 zeigt schließlich eine grundsätzliche weitere Ausführungsform der Vorrichtung, die mit ihrer Achse 5 zumindest etwa horizontal ausgerichtet außerhalb eines Gerinnes eingesetzt wird. Der Siebrost 6 ist in einem Behälter 45 gelagert und wird auch hier umlaufend angetrieben. Der Siebrost 6 besteht auch hier wie bei den vorangehend beschriebenen Ausführungsbeispielen aus einem innen angeordneten Maschensieb 7 und einem außen angeordneten Stützkörper 13. Die Zufuhr der mit Siebgut beladenen Flüssigkeit erfolgt über einen Zulauf 46 in den Innenraum des Siebrostes 6. Der Siebrost 6 weist über seine Länge durchgehend innen eine Förderwendel 47 auf, so dass der Siebrost 6 bei seinem Umlauf auch eine in horizontaler Richtung auf Abwurf 48 gerichtete Förderkomponente ausübt. Der angereicherte Schlamm wird also an dem Abwurf 48 abgegeben, während die Flüssigkeit über einen Ablauf 49 hinweggeführt wird. Bei dem Ausführungsbeispiel der Fig. 10 fehlt eine Schneckenfördereinrichtung 23. Es versteht sich, dass auch bei der Anordnung mit horizontaler Achse 5 an sich eine Schneckenfördereinrichtung 23 vorgesehen sein könnte, so dass die Vorrichtung gemäß Fig. 1 entweder geneigt oder waagerecht aufgestellt werden kann. Auch die Vorrichtung gemäß Fig. 10 weist eine Ablöseeinrichtung auf (nicht dargestellt).

### BEZUGSZEICHENLISTE

- 1: Gerinne
- 2: Flüssigkeit
- 3: Wasserstand
- 4: Pfeil
- 5: Achse
- 6: Siebrost
- 7: Maschensieb
- 8: Stirnfläche
- 9: Stirnfläche
- 10: Antrieb

- 11: Motor
- 12: Getriebe
- 13: Stützkörper
- 14: Abscheidefläche
- 15: Leitblech
- 16: Ablöseeinrichtung
- 17: Spritzleiste
- 18: Düse
- 19: Einwurftrichter
- 20: Trichterwand

- 21: Seitenwand
- 22: Durchbrechung
- 23: Schneckenfördereinrichtung
- 24: Gehäuse
- 25: Förderschnecke
- 26: Welle
- 27: Antriebsarm
- 28: Auskleideblech
- 29: Abwurfstelle
- 30: Container

- 31: Presszone
- 32: Leitung
- 33: Durchbrechung
- 34: Lochblech
- 35: Quadratmaschengewebe
- 36: Maschenweite
- 37: Durchbrechung
- 38: Steg
- 39: Trennwand
- 40: Abschlusswand

- 41: Öffnung
- 42: Stützring
- 43: Zylinderabschnitt
- 44: Innendurchmesser
- 45: Behälter
- 46: Zulauf
- 47: Förderwendel
- 48: Abwurf
- 49: Ablauf
- 50: Schweißpunkt

## Patentansprüche

1. Vorrichtung zum Entfernen von feinem Siebgut, insbesondere Schlamm, aus einer Flüssigkeit, insbesondere Abwasser, mit einem umlaufend angetriebenen zylindermantelförmigen Siebrost (6), der eine Abscheidefläche (14) aufweist und von dem Abwasser von innen nach außen durchströmt wird, und mit einer außerhalb des Siebrostes (6) angeordneten Ablöseeinrichtung (16) mit Düsen (18), aus denen zum Ablösen des auf der Innenseite des Siebrostes (6) abgeschiedenen Siebgutes Spritzwasser von außen nach innen gespritzt wird, **dadurch gekennzeichnet, dass** der Siebrost (6) aus zwei Elementen besteht, nämlich außen aus einem dem Siebrost (6) Festigkeit und Stabilität gebenden Stützkörper (13) aus Lochblech mit großformatigen Durchbrechungen (37) und innen aus einem die Abscheidefläche (14) bildenden Maschensieb (7) mit kleinformatigen Maschen, und dass das Maschensieb (7) punkt- oder bereichsweise mit dem Lochblech des Stützkörpers (13) verbunden ist.

2. Vorrichtung nach Anspruch 1, **dadurch gekennzeichnet, dass** auf der inneren Umfangsfläche des Siebrostes (6) Schöpfelemente zum Hochfördern des feinen Siebgutes angeordnet sind.

3. Vorrichtung nach Anspruch 1 oder 2, **dadurch gekennzeichnet, dass** der Stützkörper (13) einen Flächenanteil großformatiger Durchbrechungen (37) im Bereich von 70 % bis 90 % und einen Flächenanteil Stege im Bereich zwischen 30 % bis 10 % aufweist.

4. Vorrichtung nach einem der vorangehenden Ansprüche 1 bis 3, **dadurch gekennzeichnet, dass** die großformatigen Durchbrechungen (37) rechteckige, quadratische oder abgerundete Form aufweisen.

5. Vorrichtung nach mindestens einem der Ansprüche 1 bis 4, **dadurch gekennzeichnet, dass** das Maschensieb (7) eine Maschenweite (36) im Bereich zwischen 0,1 bis 1,0 mm aufweist.

6. Vorrichtung nach mindestens einem der Ansprüche 1 bis 5, **dadurch gekennzeichnet, dass** der Siebrost (6) zur Lagerung in einem Gerinne (1) eine schräg anzuordnende Achse (5) aufweist, dass die Vorrichtung eine zu einer Abwurfstelle (29) außerhalb der Flüssigkeit (2) führende Fördereinrichtung (23) mit einer angetriebenen Förderschnecke (25) aufweist und im Bereich des Siebrostes (6) ein Einwurftrichter (19) vorgesehen ist, der an die Fördereinrichtung (23) angeschlossen ist.

7. Vorrichtung nach einem der Ansprüche 3 oder 4, **dadurch gekennzeichnet, dass** der Siebrost (6) eine horizontal anzuordnende Achse (5) aufweist, und dass die innere Umfangsfläche des Maschensiebes (7) des Siebrostes (6) mit einer Leit- und Förderwendel versehen ist.

8. Vorrichtung nach mindestens einem der Ansprüche 1 bis 6, **dadurch gekennzeichnet, dass** die Schöpfelemente schlitzartige Durchbrechungen (33) aufweisen.

9. Vorrichtung nach mindestens einem der Ansprüche 1 bis 4, **dadurch gekennzeichnet, dass** der Boden des Einwurftrichters (19) geschlitzt ausgebildet ist.

10. Vorrichtung nach mindestens einem der Ansprüche 1 bis 9, **dadurch gekennzeichnet, dass** das Maschensieb (7) mit dem Stützkörper (13) durch Punktschweißen verbunden ist.

## Claims

1. Apparatus for removing fine material to be screened, especially mud, from a liquid, especially waste water, comprising a rotatingly driven cylindrical sieve grate (6) having a separation surface (14) for the material to be screened, through which waste water flows from the inside towards the outside, and a detaching device (16) being arranged outside of the sieve grate (6), the detaching device (16) including nozzles (18) from which spraying water is sprayed from the outside towards the inside to detach material to be screened adhering to the inner surface of the sieve grate (6), **characterised in that** the sieve grate (6) consists of two elements, namely a supporting body (13) providing for resistance and stability of the sieve grate (6) located at the outside and a mesh sieve (7) forming the separation surface (14) for the material to be screened located at the inside, the supporting body (13) being made of a perforated plate having large openings (37), the mesh sieve (7) having meshes of a small size being connected to the perforated plate of the supporting body (13) at points or in regions.

2. The apparatus of claim 1, **characterised in that** scooping elements are arranged at the inner circumferential surface of the sieve grate (6), the scooping elements serving to convey the fine material to be screened in an upward direction.

3. The apparatus of claim 1 or 2, **characterised in that** the supporting body (13) includes a surface portion of the large openings (37) of between 70 % and 90 % and a surface portion of the bars of between 30 % and 10 %.

4. The apparatus of one of the preceding claims 1 to 3, **characterised in that** the large openings (37) have a rectangular shape, a square shape or a rounded shape.

5. The apparatus of at least one of claims 1 to 4, **characterised in that** the mesh sieve (7) has a mesh size (36) of between 0.1 mm and 1.0 mm.

6. The apparatus of at least one of claims 1 to 5, **characterised in that** the sieve grate (6) has an inclined axis (5) for supporting it in a channel (1), **in that** the apparatus includes a screw conveyor unit (23) including a driven conveyor screw (25) leading to a discharge location (29) located outside of the liquid (2) and **in that** a feeding hopper (19) is arranged in the region of the sieve grate (6), the feeding hopper (19) being connected to the screw conveyor unit (23).

7. The apparatus of one of claims 3 or 4, **characterised in that** the sieve grate (6) has a horizontal axis (5) and the inner circumferential surface of the mesh sieve (7) of the sieve grate (6) includes a guiding and conveying helix.

8. The apparatus of at least one of claims 1 to 6, **characterised in that** the scooping elements include slit-like openings (33).

9. The apparatus of at least one of claims 1 to 4, **characterised in that** the bottom of the feeding hopper (19) is designed to include slits.

10. The apparatus of at least one of claims 1 to 9, **characterised in that** the mesh sieve (7) is connected to the supporting body (13) by spot welding.

## Revendications

1. Dispositif pour enlever un produit fin à tamiser, en particulier de la boue, un liquide, en particulier de l'eau usée, avec une grille de tamis (6) en forme d'enveloppe de cylindre, entraînée de façon rotative, qui présente une surface de précipitation (14) et est traversée par de l'eau usée de l'intérieur vers l'extérieur, et avec un dispositif de détachement (16) disposé à l'extérieur de la grille de tamis (6) avec des buses (18), à partir desquelles de l'eau projetée est pulvérisée de l'extérieur vers l'intérieur pour le détachement du produit à tamiser déposé sur le côté intérieur de la grille de tamis (6), **caractérisé en ce que** la grille de tamis (6) est constituée de deux éléments, à savoir à l'extérieur un corps de soutien (13) donnant de la solidité et de la stabilité à la grille de tamis (6) et en tôle perforée avec des percements (7) de grand format et à l'intérieur un tamis en fil métallique (7) formant la surface de précipitation (14) avec des mailles de petit format et **en ce que** le tamis en fil métallique (7) est relié par points ou par endroits à la tôle perforée du corps de soutien (13).

2. Dispositif selon la revendication 1, **caractérisé en ce que** des éléments d'épuisement sont disposés sur la surface périphérique intérieure de la grille de tamis (6) pour transporter vers le haut la marchandise fine à tamiser.

3. Dispositif selon la revendication 1 ou 2, **caractérisé en ce que** le corps de soutien (13) présente une fraction de surface de percements (37) de grand format dans la plage de 70 % à 90 % et une fraction de surface de traverses dans la plage comprise entre 30 % et 10 %.

4. Dispositif selon l'une quelconque des revendications 1 à 3, **caractérisé en ce que** les percements (37) de grand format présentent une forme rectangulaire, carrée ou arrondie.

5. Dispositif selon au moins l'une quelconque des revendications 1 à 4, **caractérisé en ce que** le tamis en fil métallique (7) présente une largeur de maille (36) située entre 0,1 et 1,0 mm.

6. Dispositif selon au moins l'une quelconque des revendications 1 à 5, **caractérisé en ce que** la grille de tamis (6) présente pour le logement dans une rigole (1) un axe (5) à disposer en biais, **en ce que** le dispositif présente un système de transport (23) allant à un point d'évacuation (29) à l'extérieur du liquide (2) avec une vis sans fin (25) entraînée et dans la zone de la grille de tamis (6) est prévu un entonnoir d'introduction (19) qui est raccordé au système de transport (23).

7. Dispositif selon l'une quelconque des revendications 3 ou 4, **caractérisé en ce que** la grille de tamis (6) présente un axe (5) à disposer horizontalement et **en ce que** la surface périphérique intérieure du tamis en fil métallique (7) de la grille de tamis (6) est dotée d'une spirale d'acheminement et de transport.

8. Dispositif selon au moins l'une quelconque des revendications 1 à 6, **caractérisé en ce que** les éléments d'épuisement présentent des percements (33) en forme de fente.

9. Dispositif selon au moins l'une quelconque des revendications 1 à 4, **caractérisé en ce que** le fond de l'entonnoir d'introduction (19) est conçu en forme de fente.

10. Dispositif selon au moins l'une quelconque des revendications 1 à 9, **caractérisé en ce que** le tamis en fil métallique (7) est relié au corps de soutien (13) par soudage par points.
